Europäisches Patentamt

European Patent Office

Office européen des brevets

(19)

(11) Veröffentlichungsnummer: **0 262 403**
**A2**

(12) # EUROPÄISCHE PATENTANMELDUNG

(21) Anmeldenummer: **87112472.3**

(51) Int. Cl.⁴: **E05B 65/00**

(22) Anmeldetag: **27.08.87**

Ein Antrag gemäss Regel 88 EPÜ auf Hinzufügung von Text zu den ursprünglich eingereichten Ansprüchen 4 und 8 liegt vor. Über diesen Antrag wird im Laufe des Verfahrens von der Prüfungsabteilung eine Entscheidung getroffen werden (Richtlinien für die Prüfung im EPA, A-V, 2.2).

(30) Priorität: **27.08.86 DE 3629029**

(43) Veröffentlichungstag der Anmeldung:
**06.04.88 Patentblatt 88/14**

(84) Benannte Vertragsstaaten:
**AT BE CH DE ES FR GB GR IT LI LU NL SE**

(71) Anmelder: **Jaschek, Manfred**
**Beekloh 4 E**
**D-2071 Ammersbek 1(DE)**

(72) Erfinder: **Jaschek, Manfred**
**Beekloh 4 E**
**D-2071 Ammersbek 1(DE)**

(74) Vertreter: **Dipl.-Ing. H. Hauck Dipl.-Phys. W. Schmitz Dipl.-Ing. E. Graalfs Dipl.-Ing. W. Wehnert Dr.-Ing. W. Döring**
**Neuer Wall 41**
**D-2000 Hamburg 36(DE)**

(54) **Autoradio-Sicherungsschloss (ARS-Schloss).**

(57) Jedes Autoradio kann durch verschiedene der Halterung im Schacht entsprechende Ausführungen des ARS-Schlosses sicher gegen Autoradio-Diebe abgeschlossen werden. Das ARS-Schloß ist der Radioarmatur angepaßt und überragt nicht die Höhe der Bedienungsknöpfe und kann als eine zusätzliche Verzierung des Gerätes links und rechts der Radioarmatur betrachtet werden. Für ein Autoradio sind jeweils zwei ARS-Schlösser erforderlich. Die Schloßschnapper werden in die Öffnungen mit kreisförmigen, rechteckigen oder rechtwinkligen Profilen, je nach Befestigungssystem im Schacht des Armaturenbretts, hineingeführt und durch halbe Schlüsseldrehung fest an die Halterung geschlossen und verriegelt. Autoradio-Diebe können auf den ersten Blick erkennen, daß sie das mit zwei ARS-Schlössern abgesicherte Autoradio nicht entwenden können, ohne die Radioarmatur auf beiden Seiten abzubrechen und das Autoradio für sie wertlos zu machen. Diese Absicherung der Autoradios gegen Diebstahl ist bei allen jetzt erhältlichen Autoradiogeräten anwendbar. Die Herstellerfirmen können für künftige Autoradiogeräte gleich ein Zylinderschloß links und rechts in die Radioarmatur einbauen, die gleichzeitig als sichere Befestigung im Schacht des Armaturenbretts dienen und die bisherigen - schwachen und vor Diebstahl nicht sichernde Befestigungssysteme überflüssig machen. Der Einbau von Zylinderschlösser in neue Autoradios würde insgesamt durch das neue Befestigungssystem die Geräte nur um ca.30 Mark...

FIG.1

## Autoradio-Sicherungsschloß (ARS-Schloß)

Die Erfindung betrifft ein Zylindersicherungsschloß für Autoradios zur Absicherung gegen Diebstahl nach dem Oberbegriff des Anspruchs 1 in verschiedenen Ausführungen, wobei folgend nur zwei Ausführungen beschrieben sind.

Besitzer(innen) von wertvollen Autoradios sind durch die ständige Zunahme von Autoradiodiebstählen verunsichert. Wie in AUTO BILD Nr. 25 vom 16. Juni 1986 berichtet wurde (Seite 20), stieg der Autoradio-Diebstahl im Jahre 1985 allein in der Bundesrepublik Deutschland um 30% auf 260 000 Autoradios und die Kosten, die von den Kaskoversicherern 1985 für gestohlene Autoradios erstattet werden mußten, gegenüber dem Vorjahr um 42% auf 270 Millionen Mark. Von allen Erstattungssummen für Kaskoschäden machen die für Radiodiebstähle den größten Teil aus, sogar mehr als für gestohlene Autos, weil bisher keine sichere technische Absicherung gegen Autoradio-Diebstahl gefunden wurde. Diese Absicherung gegen Autoradio-Diebstahl soll mit der vorgegebenen Erfindung erzielt werden.

Es ist bekannt, daß sich die organisierte Kriminalität auch in den Autoalarmanlagen kein Hindernis für den Autoradio-Diebstahl sieht. Während Komplicen Schmiere stehen, zerstören die Täter sogar in Tiefgaragen die Türscheibe eines BMW, der über 100 000,-DM kostet, um trotz ausgelöstem Alarmsignal schnell mit Ausklinkbügeln das teuere Autoradio zu stehlen und zu verschwinden. Wie AUTO BILD Nr. 25 vom 16. Juni 1986 a. a. O zu entnehmen ist, hat ·die Polizei überall in den Zentren des Verbrechens , in Hamburg, Frankfurt, Berlin, München oder Köln, Sonderkommandos eingerichtet, die speziell auf den Radioklau gedrillt sind. Die Versicherungen bilden besondere Krisenstäbe. Trotzdem schlagen Zeitungsberichte Alarm über die Zunahme der Seuche des Autoklaus, die sich auf die Außenbezirke der Städte ausgeweitet hat.

Die bisherigen Überlegungen und Techniken haben sich als wenig praktikabel oder wirkungslos erwiesen. Sie reduzieren auf die drei im AUTO BILD Nr.25 a. a. O beschriebenen Möglichkeiten:

a) Kassette zum Abschließen: Die eingeschobene Kassette für rund 50 Mark verriegelt das kostbare Autoradio fest im Schacht. Leider ist die Festigkeit des Verriegelungsstiftes und der Kassette so gering, daß nach schneller Einführung der Ausklinkbügel das Autoradio mit zwei leichten Hebelwerkzeugen unbeschädigt aus dem Schacht herausgebrochen werden kann, wie auch durch Aufbrechen der Kassette. Außerdem wird oft der Schlüssel zur Kassette vergessen öder für die Diebe liegen gelassen, so daß selbst der Besitzer damit unlösbare Probleme hat.

b) Eine Maske für das teure Stück: In der Nobelkarosse wirkt die Billigblende zum Aufstecken (rund 20 Mark) wenig glaubhaft. Absolut kein Hindernis für Autoradio-Diebe.

c) Radio am Griff herausnehmen: die einfachste und sicherste Methode. Dafür muß man jetzt vor Taschendieben aufpassen! In der Tat! Außerdem äußerst hinderlich, ständig die Umhängetasche mit dem Autoradio mit sich zu führen.

Der Erfindung liegt die Aufgabe zugrunde, mit zwei ARS-Schlösser das Autoradio so sicher im Armaturenschacht abzuschließen, daß es sich für keinen Autoradiodieb mehr lohnt, in das Fahrzeug wegen Autoradio-Diebstahl einzubrechen, wobei auch dieser Nebenschaden, der oft äußerst hoch ist, verhindert wird. Der Schlüssel für die ARS-Schlösser kann zu Hause gelassen werden und käme erst·zur Anwendung, wenn etwas am Autoradio zu machen ist oder das Gerät ausgewechselt werden muß (ist also unerreichbar für den Autoradiodieb). Versucht er es trotzdem das Autoradio gewaltsam zu entwenden, dann geht das nur durch Abbrechen der Autoradioarmatur an der linken und rechten Seite des Gerätes zusammen mit den ARS-schlösser. Eine derart beschädigte Autoradioarmatur entwertet völlig den Wert des Radiogerätes für den Dieb. Kein Hehler würde sich mit den Reparaturen des Gerätes abgeben, da die Kosten höher liegen würden als der Verkauf des gestohlenen Gerätes einbringen würde.

Diese Aufgabe wird erfindungsgemäß durch passende Ausführungen der ARS-Schlösser für die verschiedenen Befestigungsarten der einzelnen Autoradiomodelle bzw. Marken nach den kennzeichnenden Merkmalen des Anspruchs 1,8 gelöst.

Um alle Autoradios vor Diebstahl absichern zu können, sind verschiedene Ausführungen der ARS-Schlösser erforderlich, deren Ausgetaltung durch die je nach Autoradiomodell verschiedene Einführungskanäle (Öffnungen) in der Autoradioarmatur zum Ausklinken der Halterung im Armaturenschacht vorgegeben ist. Auch die äußere Gestaltung der ARS-Schlösser muß dem Bild der Autoradioarmatur angepaßt sein. Das ist nur ein vorläufiges Problem, bis die Autoradioindustrie zu einer einheitlichen Ausgestaltung der Befestigung der Autoradiogeräte im Armaturenbrettschacht der Autos kommt. Die Anwendung der ARS-Schlösser ist äußerst einfach; Einsetzen in die Einführungskanäle wie bei Ausklinkbügeln zur Entnahme des Gerätes aus dem Schacht und mit halber Schlüsseldrehung abschließen.

Die mit der Erfindung erzielten Vorteile bestehen insbesondere darin, daß dem Autoradiodiebstahl überall wirkungsvoll das Handwerk gelegt wird, wie es bisher durch keine technische und polizeiliche Maßnahme möglich war. Der Dieb wird schon durch den ersten Blick auf die ARS-Schlösser davor abgeschreckt, den Versuch eines Diebstahls zu unternehmen. Die zwei ARS-Schlösser, die zum Abschließen eines Autoradiogerätes erforderlich sind, werden billiger zu kaufen sein als die Abschließkassette und vor allem wirkungsvoller gegen Diebstahl von Autoradios die Besitzer(innen) schützen. Damit werden aber vor allem die hohen Schadenskosten der Fahndung nach Autoradiodiebe und der Kaskoversicherern vermieden, wenn nicht gar bis auf die Fälle der nicht mit ARS-Schlösser abgesicherten Autoradiogeräte reduziert.

Zwei Ausführungsbeispiele der Erfindung sind in den Zeichnungen dargestellt und werden im folgenden näher beschrieben.

Es zeigen

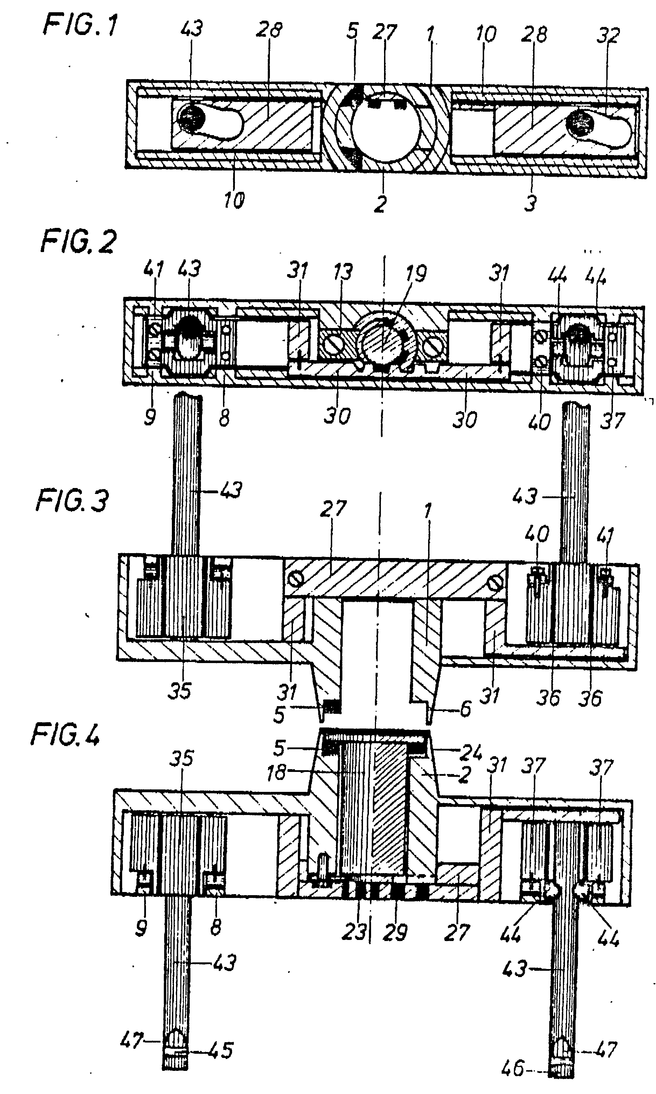

Ausführung 1: Fig. 1 Vorderansicht im Querschnitt mit compaktem Schloßblock (1), Schlüsselkolbenzylinder (2) und Compactgehäuse (3) sowie Führungsausfräsung (10) für Schließblock (28). Schließblock (28) mit Zahnschiene (27), Schließ-, Öffnungs-und Verriegelungsebenen (32) und Schloßschnapper mit kreisförmigem Profil (43).

Fig. 2 Hinteransicht im Querschnitt mit Gehäusehalterungen (8, 9) für die zwei Befestigungsblöcke (35, Fig. 17), Paßstücke zur Befestigung des Schlüsselkolbens (13), Befestigungsvertiefung des Schlüsselkolbens (19), Zahnschiene des Schließblocks (30), Schließblock (31), Laschenflächen des Befestigungsblocks (37), Innere Befestigungslaschen (40), Äußere Befestigungslaschen (41), Schloßschnapper (43) und Lager (44) der Befestigungsblöcke (35) im Schloßgehäuse (3).

Fig. 3 Rechtsansicht im Querschnitt mit Schloßblock (1), Drehbegrenzer (5) des Schloßkolbens (18), Einsatzbegrenzer (6) des Schloßkolbens (18), Führungsplatte (27) der Zahnschiene (30), Schließblock (31), Befestigungsblock (35) mit Einführungsschrägen (36), Befestigungslaschen (40, 41) und Schloßschnapper (43).

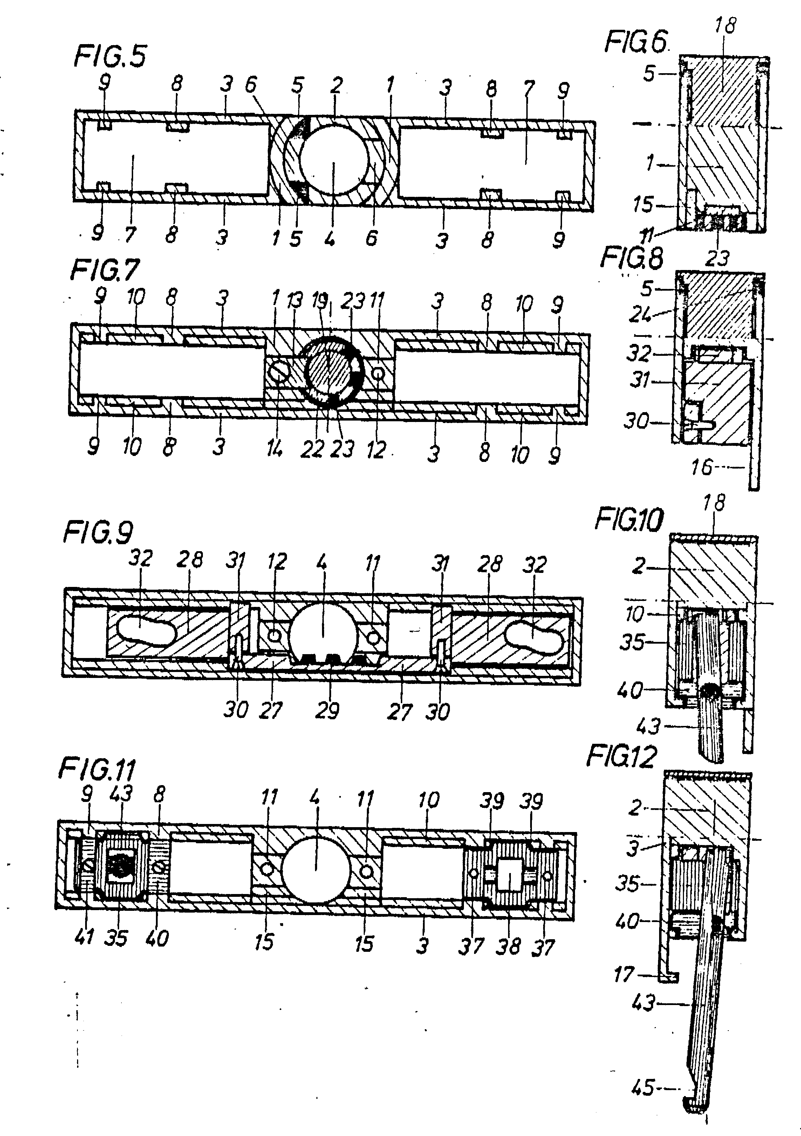

Fig. 4 Linksansicht im Querschnitt mit Schlüsselkolbenzylinder (2), Drehbegrenzer (5), Gehäusehalterungen (8, 9) für die Befestigungsblöcke (35), Schlüsselkolben (18), Zahnrad (23) des Schlüsselkolbens (18), Anstoßbegrenzer (24) des Schlüsselkolbens (18), Führungsplatte der Zahnschiene (27), Schließzähne der Zahnschiene (29), Schließblock(31), Befestigungsblock (35), Achsenträger (37), Schloßschnapper (43) mit Drehachsen (44), Einklinkebene (45), Einklinkhalter (46), Einklinkausschnitt (47).

Fig. 5 Compakter Schloßblock in Voderansicht mit Schloßblock (1), Schlüsselkolbenzylinder (2), Compactgehäuse (3), Zylinderraum (4) für Schlüsselkolben (18), Drehbegrenzer (5), Halterungslager der Schlüsselkolbenfeder (6), abgeschlossener Innenraum des Compactgehäuses (7), Gehäusehalterungen (8, 9).

Fig. 6 Seitenansicht im Querschnitt mit Schloßblock (1), Drehbegrenzer (5), Führungsausschnitt (15) für Führungsplatte (27), Paßausschnitt (11) der Befestigungspaßstücke (13), Schlüsselkolben (18), Zahnrad (23) des Schlüsselkolbens (18).

Fig. 7 Compacter Schloßblock in Hinteransicht mit Schloßblock (1), Schloßgehäuse (3), Gehäusehalterungen (8, 9), Führungsausfräsung und Einführungsbegrenzung (10) des Befestigungsblocks (35). Paßausschnitt (11), Befestigungsbohrung mit Gewinde (12), Befestigungspaßstück (13), Befestigungsschraube (14), Kreisförmige Befestigungsvertiefung (22) für Paßstücke (13), Zahnrad (23).

Fig. 8 Seitenansicht in zweiteiligem Querschnitt mit Drehbegrenzer (5), Anstoßbegrenzer (24), Seitenverdeck (16), Verbindungsstück (30) des Schließblocks (28), Verbindungsträger (31) des Schließblocks (28), Schließ-, Öffnungs-und Verriegelungsebenen (32) des Schließblocks (28).

Fig. 9 Hinteransicht des Schloßblocks mit Schließ block im Querschnitt, Zylinderraum (4), Paßausschnitt (11), Befestigungsbohrung mit Gewinde (12), Führungsplatte der Zahnradschiene (27) mit Befestigung (30) und Zahnschiene (29), Schließblock (28) mit Verbindungsträger (31) und Schließ-, Öffnungs-und Verriegelungsebenen (32).

Fig. 10 Schloßblock in zweiteiligem Querschnitt mit Befestigungsblock, Schlüsselkolbenzylinder (2), Führungsausfräsung (10) für Schließblock (28), Befestigungsblock (35), Schloßschnapper (43).

Fig. 11 Hinteransicht des Schloßblocks mit Befestigungsblock im Querschnitt, Zylinderraum (4), Paßausschnitte (11), Führungsausfräsung (10) des Schließblocks und Begrenzer des Befestigungsblocks (35) nach innen, Schloßgehäuse (3), Gehäusehalterungen (8, 9), Führungsausschnitt (15) für Führungsplatte (27), Befestigungsblock (35), Achsenträger mit Befestigungsgewinde (37), Bewegungskammer (38) für Schloßschnapper (43) mit Drehlager, innere und äußere Befestigungslaschen (40,41), Schloßschnapper (43).

Fig. 12 Seitenansicht des Schloßblocks in zweiteiligem Querschnitt mit Schlüsselkolbenzylinder (2), Compactgehäuse (3), Einfaßwinkel (17) bei schmalem Rand der Einführungsöffnungen für die Ausklinkbügel und seitlicher Verankerung der Schließschnapper (43), Befestigungsblock (35), Befestigungslasche (40), Schloßschnapper (43), Einklinkebene (45).

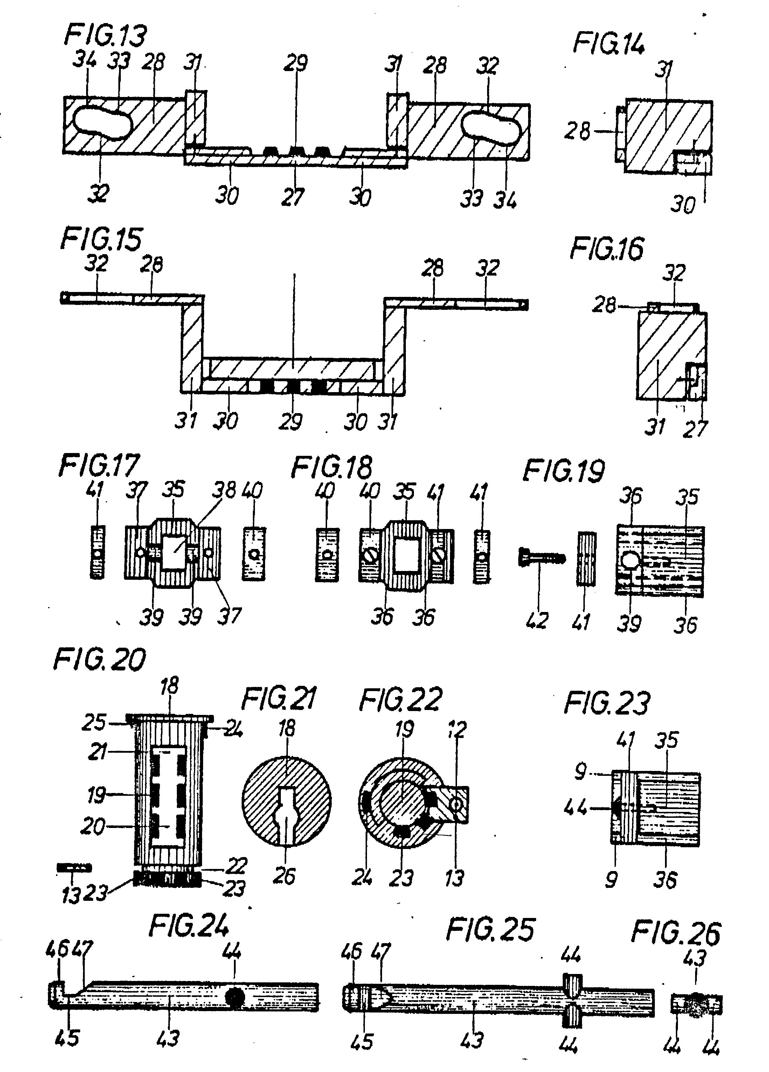

Fig. 13 Linke Ansicht des Schließblocks (28) mit Schließzähne (29) der Zahnschiene (30) und Führungsplatte (27), Befestigungsträger (31), Schließ-und Öffnungsschrägen (32), Verriegelungsebenen (33,34).

14 Hinteransicht des Schließblocks (28) mit Befestigungsträger (31), Zahnschiene (30).

Fig. 15 Seitenansicht des Schließblocks (28) mit Schließzähne (29) und Zahnschiene (30) mit Führungsplatte (27), Befestigungsträger (31), Schließ-, Verriegelungs-und Öffnungsebenen (32).

Fig. 16 Seitenansicht des Schließblocks (28) mit Befestigungsträger (31), Schließ-, Verrieglungs- und Öffnungsbenen (32) und Zahnschiene (30) mit Führungsplatte (27).

Fig. 17 Hinteransicht des Befestigungsblocks (35) mit Achsenträger (37), Bewegungskammer (38), Drehlager (39), innere Befestigungslasche (40), äußere Befestigungslasche (41).

Fig. 18 Hinteransicht des Befestigungsblocks (35) mit verdeckten Drehlager (39) und Führungsschrägen (36), innere Befestigungslasche (40), äußere Befestigungslasche (41).

Fig. 19 Seitenansicht des Befestigungsblocks (35) mit Führungsschrägen (36), Drehlager (39), äußere Befestigungslasche (41), Befestigungsschraube (42).

Fig. 20 Seitenansicht des Schlüsselkolbens (18) mit Schließfederbegrenzer (19), Schlüsselpassage (20), Schlüsselfederkammern (21), Befestigungsvertiefung (22), Schließzahnrad (23), Befestigungslasche (13), Anstoßbegrenzer (24), Einsatzbegrenzer (25).

Fig. 21 Draufsicht des Schlüsselkolbens (18) mit Schlüsseleinführung (26).

Fig. 22 Hinteransicht des Schlüsselkolbens mit Schließfederbegrenzer (19) verdeckt, Befestigungsbohrung (12), Befestigungspaßstück (13), Schließzahnrad (23), Anstoßbegrenzer (24).

Fig. 23 Seitenansicht des Schließblocks (35) mit Gehäusehalterungen (9), Führungsschrägen (36), äußere Befestigungslasche (41), Drehachsen (44) des Schloßschnapper (43).

Fig. 24 Seitenansicht des Schloßschnapper (43) mit Drehachse (44), Einklinkebene (45), Einklinkhalter (46), Einklinkausschnitt (47).

Fig. 25 Seitenansicht des Schloßschnapper bei 90 Grad Längsdrehung zu Fig. 24 mit Drehachsen (44), Einklinkebene (45), Einklinkhalter (46), Einklinkausschnitt (47).

Fig. 26 Hinteransicht des Schloßschnapper (43) mit Drehsachsen (44).

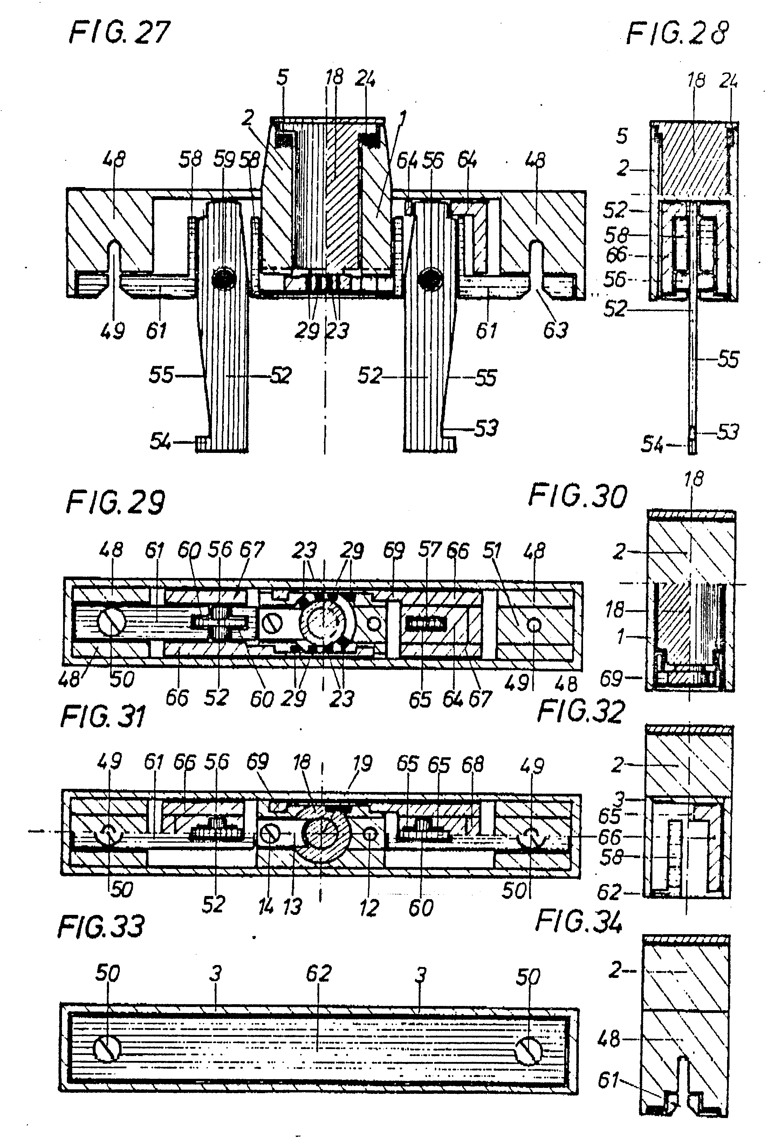

Ausführung II: Fig. 27 Linksansicht in zweiteiligem Querschnitt mit compactem Schloßblock (1), Schlüsselkolbenzylinder (2), Drehbegrenzer (5), Schlüsselkolben (18), Schließzahnrad (23), Anstoßbegrenzer (24), Schließzähne (29) der Zahnschiene (30), Befestigunglager (48), Befestigungsbohrung (49) mit Gewinde, Schloßschnapper (52) mit rechteckigem Profil, Einklinkebene (53), Einklinkhalter (54), Einklinkverjüngung (55), Drehachse (56), Steuerungsstück (57), Paßblock (58) des Befestigungsblocks, Drehlager (59), Befestigungsschiene (61), Befestigungsbohrung (63), modifizierter hufeisenförmiger Schließblock (64).

Fig. 28 Seitenansicht in zweiteiligem Querschnitt zu Fig. 27 mit Schlüsselkolbenzylinder (2), Drehbegrenzer (5), Anstoßbengrenzer (24), Schloßschnapper (52), Einklinkebene (53), Einklinkhalter (54), Einklinkverjüngung (55), Drehachsen (56), Paßblock (58), hufeisenförmiger Paßlager (66).

Fig. 29 Hinteransicht des modifizierten ARS-Schlosses in zweiteiligem Querschnitt mit Zahnrad mit zwei sich gegenüberliegenden Schließ-und Öffnungszähnen (23), zwei Zähne (29) der Zahnschiene (69), Befestigungseinfassung (48) mit Befestigungslager (51) und Befestigungsbohrung mit Gewinde (49), Befestigungsschraube (50), Schloßschnapper (52), Drehachse (56), Steuerungsstück (57), Bewegungslager (60), Befestigungsschiene (61), Schließblock (64) mit rechteckiger Öffnungs- und Schließausfräsung (65), hufeisenförmiger Paßlager (66,67).

Fig. 30 Seitenansicht mit zweiteiligem Querschnitt zu Fig. 29, compacter Schloßblock (1), Schlüsselkolbenzylinder (2),Schlüsselkolben (18), Zanhschiene(69).

Fig. 31 Hinteransicht des ARS-Schlosses in mehrteiligem Querschnitt mit Bohrung (12) zur Befestigung der Paßstücke (13) mit Schrauben (14), Schlüsselkolben (18), Schließfederbegrenzer (19) verdeckt, Befestigungsbohrung mit Gewinde (49) für Befestigungsschraube (50), Schloßschnapper (52), Drehachse (56), Bewegungslager (60), Befestigungsschiene (61), Schließ-und Öffnungsausfräsung (65), Verbindungsträger (68) des Schließblock (64), Zahnschiene (69).

Fig. 32 Seitenansicht in zweiteiligem Querschnitt zu Fig. 31 mit Schlüssekolbenzylinder (2), compactgehäuse (3), Paßblock (58), rückwärtige Schließplatte (62), Schließ-und Öffnungsausfräsung (65), hufeisenförmiger Paßlager (66).

Fig. 33 Rückansicht der verschraubten Schließplatte (62) mit Compaktgehäuse (3), Schließschrauben (50).

Fig. 34 Rechte Seitenansicht im Querschnitt mit Schlüsselkolbenzylinder (2), Befestigungseinfassung (48), Befestigungsschiene (61).

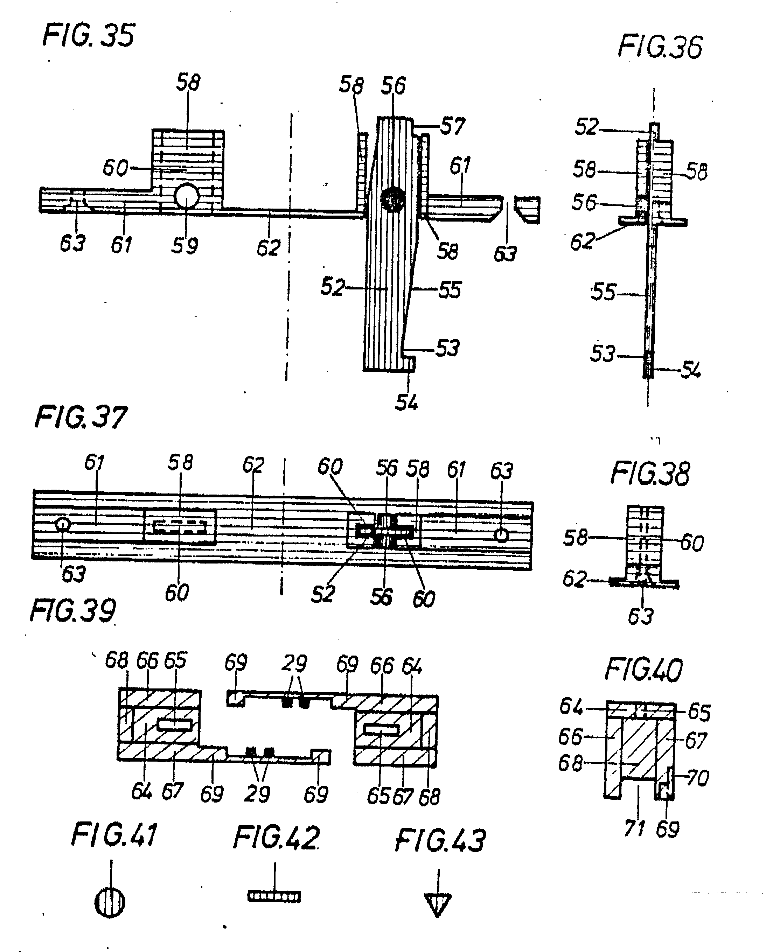

Fig. 35 Linksansicht des Befestigungspaßblocks mit Schloßschnapper (52), Einklinkebene (53), Einklinkhalter (54), Einklinkverjüngung (55), Drehachse (56), Steuerungsstück (57), Paßstück (58), Drehlager (59), Bewegungslager (60), Befestigungsschienen (61), Schließplatte (62). Befestigungsbohrung (63).

Fig. 36 Seitenansicht in zweiteiligem Querschnitt mit Schloßschnapper (52), Einklinkebene (53), Einklinkhalter (54), Einklinkverjüngung (55), Drehachse (56), Paß stück (58), Schließplatte (62).

Fig. 37 Rückensicht der Befestigungsblocks in zweiteiligem Querschnitt mit Schloßschnapper (52), Drehachsen (56), Paßstück (58), Bewegungslager (60), Befestigungsschienen (61), Schließplatte (62), Befestigungsbohrung (63).

Fig. 38 Seitensansicht zu Fig. 37 mit Paßstück (58), Bewegungslager (60), Schließplatte (62) Befestigungsbohrung (63).

Fig. 39 Seitenansicht der zwei Schließblöcke mit Schließzähnen (29) der Zahnschienen (69), Schließblökke (64) mit Schließ-und Öffnungsausfräsung (65), hufeisenförmige Paßlager (66,67), Verbindungträger (68).

Fig. 40 Seitenansicht zu Fig. 39 mit Schließblock (64), Öffnungs-und Schließausfräsung (65), hufeisenförmige Paßlager (66, 67), Verbindungsträger (68), Zahnschiene (69), Führungsplatte (70) der Zahnschiene (69), Aussparung (71) für Befestigungsschiene (61).

Fig. 41 Querschnittansicht des Schloßschnappers mit kreisförmigen Prifil; Fig. 42 mit rechteckigen Profil; Fig. 43 mit rechtwinkligen Profil.

Es folgt die Erläuterung der Erfindung anhand der Zeichnungen und nach Wirkungsweise der dargestellten Erfindung:

Die Anwendung der ARS-Schlösser ist sehr einfach und unproblematisch. Bei der Ausführung I der Erfindung wird zunächst ein ARS-Schloß links oder rechts der Autoradioarmatur in der Weise zum Abschließen eingesetzt, daß die beiden Schloßschnapper (43) in die kreisförmigen Einführungsöffnungen für die Ausklinkbügel bis zum Anstoß des Schlosses auf die Autoradioarmatur hineingeschoben werden und dann das Schloß mit dem Schlüssel abgeschlossen. Durch halbe Drehung des Schlüssels in Schließrichtung schiebt das in die Zähne (29) der Zahnschiene (30) hineingreifende Zahnrad (23) des Schlüsselkolbens (18) den Schließblock (28) im Compaktgehäuse (3) von links nach rechts, wobei die inneren Enden der beiden Schloßschnapper (43) durch ihre über die Drehachsen (44) im Befestigungsblock (35) schwenkbaren Verankerung und endend in die beiden Ausfräsungen (32) von der offenen Lage (34) über die Schließschrägen (32) axial von unten nach oben in die geschlossene Lage (33) gesteuert und verriegelt werden, während sich die Einklinkebene (45) am äußeren Ende der beiden Schloßschnapper (43) in das Einklinkblech der Halterung im Schacht bewegt bis zum Anstoß und durch den Einklinkhalter (46) in dieser Lage festverriegelt bleibt, wonach der Schlüssel abgezogen werden kann. Zum Öffnen des Schlosses vollzieht sich der umgekehrte Vorgang und das ARS-Schloß kann abgenommen werden.

Bei der Ausführung II der Erfindung bewegen sich bei halber Schlüsseldrehung in die Schließrichtung die zwei voneinander getrennten Schließblöcke (64) entgegengesetzt nach Innen zu und steuern die in . ihrer Schließ-und Öffnungsausfräsung (65) hineinragenden Steuerungsstücke (57) der rechteckförmigen Schloßschnapper (52) mit sich nach Innen über die schwenkbaren Achsen (56) im Befestigungsblock (58) ziehen bis die Einklinkebenen (53) am äußeren Ende der Schloßschnapper (52) in ihrer Bewegung nach Außen fest in das Halterungsblech im Schacht geschlossen sind und der Schlüssel abgezogen werden kann. Bei der Öffnung des Schlosses durch Drehung des Schlüssels vollzieht sich der Öffnungsvorgang, wobei die inneren Enden der Schloßschnapper nach Außen, während die äußeren Enden der Schloßschnapper (52) nach Innen in die offene Lage gesteuert werden.

Die einfachste und sicherste Ausführung nach An spruch 13 ist bereits links und rechts in der Radioarmatur eingebaut, so daß von Außen nur der Schlitz zur Einführung des Schlüssels zu sehen ist. Das Zylinderschloß links und rechts am Radiogerät ist gleichzeitig die Halterung des Radiogerätes im Schacht des Armaturenbretts. Nach Einführung des Radiogerätes in den Schacht wird zur Befestigung des Gerätes einfach das Zylinderschloß an der linken Seite und das Zylinderschloß an der rechten Seite des Gerätes durch Schlüsseldrehung geschlossen und der Schlüssel abgezogen. Der eingedrehte Schließbügel des Zylinderschlosses befestigt noch fester das Gerät in den Schacht des Armaturenbretts als die bisherigen Befestigungssysteme.

## Ansprüche

1. Autoradio-Sicherungsschloß (ARS-Schloß) zur Absicherung von Autoradios gegen Diebstahl, **dadurch gekennzeichnet**, daß ein herkömmliches Zylinderschloß mit zwei Schloßschnapper bestückt wird, die in die runden oder rechteckigen Öffnungen an der linken und rechten Seite der Radioarmatur zur Einführung der Ausklinkbügel zwecks Lösung der Befestigung des Autoradiogerätes im Gehäuse des Armaturenbretts und Herausnahme des Gerätes hineingeführt werden und dann mit dem Schlüssel des Zylinderschlosses so fest an das innere Blech des Befestigungsgehäuses im Armaturenbrett geschlossen werden, daß das Autoradio ohne den passenden Schlüssel für das Zylinderschloß aus dem Gehäuse des Armaturenbretts nicht entnommen werden kann, es sei denn durch Zerstörung der Radioarmatur an den beiden ARS-Schlösser links und rechts des Gerätes und der Halterungsbleche im Gehäuse des Armaturenbretts.

2. ARS-Schloß nach Anspruch 1, dadurch gekennzeichnet, daß der zur Radioarmatur passende Zylinderschloßblock mit einem herkömmlichen Schlüsselkolben bestückt ist an dessen Ende sich ein Zahnrad mit einer so bemessenen Anzahl von Schließzähnen befindet, daß bei einer halben Schlüsseldrehung das Schloß fest am Blech der Armatur geschlossen bzw. von der Armatur aufgeschlossen wird.

3. ARS-Schloß nach Anspruch 1, dadurch gekennzeichnet, daß der Schlüsselkolben an einer kreisförmigen Vertiefung unmittelbar vor dem Zahnrad durch zwei Paßstücke mit jeweils einer Schraube von der Innenseite her am Zylinderschloßblock drehbar befestigt wird.

4. ARS-Schloß nach Anspruch 1, dadurch gekennzeichnet, daß das Schloß mit einem Schließblock beweglich im compakten Zylinderschloßblock bestückt ist, der zum Schließen oder Öffnen des Schlosses durch eine zum Zahnrad des Schlüsselkolbens passende Zahnschiene gesteuert wird an der links und rechts des Schlüsselkolbens ein Riegelblock gleitend in der Ausfräsung im compakten Zylinderschloßblock befestigt ist und in deren Steuerungsaussparung jeweils ein Ende der zwei axialbeweglichen Schloßschnapper mit kreisförmigem Profil hineinragt und bei der Schließbewegung des Riegelblocks schräg nach oben gesteuert und verriegelt wird, während das Ende der zwei axialbeweglichenSchloßschnapper bei der Öffnungs des Riegelblocks zunächst entriegelt und alsdann durch die von oben nach unten führende Schräge in die offene Lage zurückgeführt und festgesetzt wird.

5. ARS-Schloß nach Anspruch 1, dadurch gekennzeichnet, daß der Schließ-und Riegelblock nach Anspruch 4 durch jeweils einen Befestigungsblock mit Führungsschienen im Zylinderschloßblock und zwei Laschen mit Schrauben in die bewegliche Lage befestigt wird.

6. ARS-Schloß nach Anspruch 1, dadurch gekennzeichnet, daß jedes der beiden Befestigungsblöcke nach Anspruch 5 mit jeweils einem Schloßschnapper in axialbeweglichen Lager unmittelbar an dem inneren Ende des Blockschlosses bestückt ist.

7. ARS-Schloß nach Anspruch 1, dadurch gekennzeichnet, daß das Schloß mit zwei Schloßschnapper bestückt ist, die sich jeweils an zwei Achsstücken in eine offene und eine geschlossene Lage durch Halbe Schlusseldrehung steuern lassen und an deren äußeren Ende sich ein Schließeinschnitt zum Festschließen und Verriegeln am Blech des Armaturgehäuses befindet, wobei sich der Abstand der beiden Schloßschnapper voneinander nach dem Abstand der Öffnungen für die Ausklinkbügel richtet, so auch ihr kreisförmiger Durchmesser.

8. ARS-Schloß nach Anspruch 1, dadurch gekennzeichnet, daß bei anderen als kreisförmigen Ausklinkbügelprofile und entsprechende Öffnungen in der Radioarmatur Ausführungen des Schlosses hinsichtlich Schließ-und Befestigungsblock sowie Schloßschnapper entsprechend zu gestalten sind, wie z. B. die zweite Ausfüh-mit einem rechteckigen Schloßschnapperprofil, zwei voneinander getrennten Schließblöcke und einem compakten Befestigungsblock mit Lager für die zwei nach außen - schliessenden Schloßschnapper mit rechteckigem Profil und Befestigung mit zwei Schrauben auf der Rückseite des Schlosses.

9. ARS-Schloß nach Anspruch 1, 8, dadurch gekennzeichnet, daß der Schlüsselkolben mit zwei sich gegenüber zur oberen und unteren Seite stehenden Zahnradzähnen bestückt ist, so daß zum Schließen die oberen Zahnradzähne in die zwei oberen Zähne der Zahnschiene des linken Schließblocks greifen und diesen nach links - schieben, während die unteren Zahnradzähne in die zwei unteren Zähne der Zahnschiene des rechten Schließblocks greifen und diesen nach rechts - schieben bis nach halber Schlüsseldrehung die Zahnradzähne von der anderen Seite kommend an die Schienenzähne des oberen und unteren Schließblocks stoßen und diese in der geschlossenen Lage blockieren - zum Öffnen des Schlosses durch halbe Schlüsseldrehung in die andere Richtung vollzieht sich der umgekehrte Vorgang in die offene Lage des Schlosses.

10. ARS-Schloß nach Anspruch 1, 8, dadurch gekennzeichnet, daß die Schließvorrichtung aus zwei voneinander getrennten linken und rechten Schließblöcken mit jeweils einer Zahnschiene, einer Rückwand mit rechteckiger Ausfräsung in die die Enden der Schloßschnapper gleichem rechteckigen Profils hineinragen und axial zum Schließen nach Außen, zum Öffnen nach Innen bewegt werden, und in deren Hufeisenprofil das jeweilige Paßstück des Befestigungsblocks mit Lager für die Drehachsen des jeweiligen Schloßschnappers hineingeschoben wird, wobei nach Befestigung des Befestigungblocks durch zwei Schrauben auf der Rückseite des Schlosses die Schließblöcke für die Schließ-und Öffnungsbewegung der zwei Schloßschnapper nach Außen bzw. nach Innen beweglich bleiben.

11. ARS-Schloß nach Anspruch 1, 8, dadurch gekennzeichnet, daß das Schloß mit einem die Rückseite völlig abschließenden und mit zwei Schrauben zu befestigenden Befestigungsblock bestückt ist, der in der Innenseite nach Außen hin mit einer Befestigungsschiene verstärkt und davor mit jeweils einem Paßblock in das hufeisenförmige Profil der beiden Schließblöcke hinein paßt, in den eine rechteckige Führungskammer für die bewegliche Befestigung der dazu passenden rechteckigen Schloßschnapper mit Drehachse ganz nah an der durch den Befestigungsblock bildenden Rückwand des Schlosses eingefräst ist.

12. ARS-Schloß nach Anspruch 1, 8, dadurch gekennzeichnet, daß der Befestigungsblock nach Anspruch 11 mit zwei in die Paßblöcke passenden Schloßschnapper rechteckigen Profils mit Drehachse in der Weise bestückt ist, daß das an dem einen Ende verjüngte Steuerungsstück für die Schließ-und Öffnungsbewegung der Schließblöcke in diese hineinragt und das andere Ende mit einem Einklinkeinschnitt in das Befestigungsblech der Gehäusearmatur passend gestaltet ist.

13. ARS-Schloß nach Anspruch 1, dadurch gekennzeichnet, daß jeweils ein herkömmliches Zylinderschloß mit modifizierten in die Kreuzverzahnung am Ende des Schlüsselkolbens festgeschraubten Schließbügel in der Weise links und rechts anstelle des bisherigen Befestigungssystems im Schacht des Armaturenbretts mit Ausklinkbügel zur Herausnahme des Autoradiogeräts in die Autoradioarmatur eingebaut wird, daß das neue Autoradiogerät in den Schacht hineingeschoben und mit einem Zylinderschloßschlüssel links und rechts fest in den Schacht abgeschlossen wird und ohne den passenden Schlüssel nicht mehr durch Diebe oder Dritte herausgenommen werden kann.

0 262 403

Nummer: 36 29 029
Int. Cl.⁴: E 05 B 65/00
Anmeldetag: 27. August 1986
Offenlegungstag: 7. Mai 1987

FIG.1

FIG.2

FIG.3

FIG.4

708 819/398

FIG.5

FIG.6

FIG.7

FIG.8

FIG.9

FIG.10

FIG.11

FIG.12

FIG.13

FIG.14

FIG.15

FIG.16

FIG.17

FIG.18

FIG.19

FIG.20

FIG.21

FIG.22

FIG.23

FIG.24

FIG.25

FIG.26

FIG. 27

FIG. 28

FIG. 29

FIG. 30

FIG. 31

FIG. 32

FIG. 33

FIG. 34

3629029

FIG. 35

FIG. 36

FIG. 37

FIG. 38

FIG. 39

FIG. 40

FIG. 41

FIG. 42

FIG. 43